# EUROPÄISCHE PATENTANMELDUNG

(11) **EP 0 653 616 A2**
(43) Veröffentlichungstag der Anmeldung: **17.05.1995**
(21) Anmeldenummer: 94113351.4
(22) Anmeldetag: 26.08.1994
(51) Int. Cl.: G01M 5/00, G01L 1/06, G01N 3/06

(54) **Einrichtung zum Überwachen der Zeitfestigkeit von Strukturen**

(30) Priorität: 13.11.1993 DE 4338850
(71) Anmelder: DORNIER GmbH, D-88039 Friedrichshafen (DE)
(72) Erfinder: Füssinger, Reinhold, Ing., D-88045 Friedrichshafen (DE)
(74) Vertreter: Landsmann, Ralf, Dipl.-Ing.

(57) **Zusammenfassung**

Einrichtung zur Überwachung der Zeitfestigkeit von Strukturen mittels einer Probe, die Kerben (**8, 10, 12**) aufweist.

## Beschreibung

Die Erfindung betrifft eine Einrichtung zum Überwachen der Zeitfestigkeit von Strukturen. Solche Eineinrichtungen werden auch als Lastzähler bezeichnet.

Aus dem Stand der Technik sind als Lastzähler für Metallstrukturen bekannt:
1. Überwachung der Struktur mit Hilfe von Dehnmeßstreifen (DMS) und entsprechenden Auswerte-Elektroniken.
   - Vorteile:: - Meßtechnisch sehr genaue Erfassung.
   - Nachteile:: - Verbindung (Klebung) zwischen DMS und Struktur altert und führt im Laufe der Zeit zu Ungenauigkeit.
   - Umwelteinflüsse auf die Struktur wie z.B. Korrosion werden nicht erfaßt.
   - Streuungen der Materialkennwerte werden nicht erfaßt.
   - Energie an der Struktur erforderlich für Speicherelektronik.
   - Relativ aufwendige Auswertung.
   - Relativ teuer.
2. Überwachung der Struktur mit Hilfe von Metallfolien, die durch Dehnungen ihr Reflexionsverhalten verändern.
   - Vorteile:: - Keine Energie an der Erfassungsstelle erforderlich.
   - Nachteile:: - Verbindung (Klebung) zwischen DMS und Struktur altert und führt im Laufe der Zeit zu Ungenauigkeit.
   - Korrosion der Meßstreifen macht sie unbrauchbar.
   - Von der Geschicklichkeit des Auswerters abhängiges Ergebnis.
   - Temperaturzyklen werden als Belastungszyklen registriert.
   - Streuungen der Materialkennwerte werden nicht erfaßt.
   - Umwelteinflüsse auf die Struktur wie z.B. Korrosion werden nicht erfaßt.
   - Relativ teuer.
3. Vorrichtung die an der Struktur angebracht ist und in die kleine verschieden gekerbte Probestäbe eingespannt werden.
   - Vorteile:: - Keine Energie an der Erfassungsstelle erforderlich
   - Nachteile:: - Streuungen der Materialkennwerte werden nicht erfaßt.
   - Umwelteinflüsse auf die Struktur wie z.B. Korrosion werden nicht erfaßt.
   - Relativ aufwendig, empfindlich und teuer.

Aufgabe der Erfindung ist es, einen Lastzähler zu schaffen, der sämtliche Einflüsse auf die Struktur einschliesslich Korrosion und anderer Umwelteinflüsse erfaßt und durch Sichtkontrolle ablesbar ist.

Diese Aufgabe wird erfindungsgemäß durch den Gegenstand des Hauptanspruchs gelöst. Die Unteransprüche betreffen vorteilhafte Ausgestaltungen der Erfindung.

Beim Gegenstand der Erfindung wird eine mit verschiedenen Kerben geschädigte Probe in die zu überwachende Struktur integriert.

Die Probe und die Kerben werden dabei so gestaltet, daß die Probe an den verschiedenen Kerben, z.B. bei 50, 80 und 100 % der Lebensdauer durchreißt. Durch die Gestaltung der Probe wird erreicht, daß sich der Riß einer Kerbe nicht in die Struktur fortsetzt. Vorzugweise sollte die Probe in die Struktur integriert sein, um damit alle Streuungen des Materials abzudecken. Ist eine Integration der Probe in die Struktur nicht möglich, ist auch eine Verbindung der Probe mit der Struktur durch geeignete Verbindungselemente (z.B. Schrauben, Niete, Stifte) möglich.

Vorteile der Erfindung:
- Keine Energie an der Erfassungsstelle erforderlich.
- Streuungen der Materialkennwerte werden erfaßt.
- Umwelteinflüsse auf die Struktur wie z.B. Korrosion werden erfaßt.
- Relativ kostengünstig und kann deshalb auch an einem Strukturmodul öfters vorgesehen werden.
   Dadurch ist Redundanz möglich und die Erfassung der Streuung der Belastung durch die Modularität von Brücken kann erfaßt werden.
- Auswertung erfolgt im Rahmen der normalen Inspektion.
- Kein Auswertegerät erforderlich.

Die Erfindung wird nachfolgend anhand von Figuren näher erläutert.

Es zeigen:
Fig. 1 einen in eine Struktur integrierten erfindungsgemäßen Lastzähler,
Fig. 2a einen auf die Struktur aufgeschraubten Lastzähler, winkelförmig,
Fig. 2b einen auf die Struktur aufgeschraubten Lastzähler, flach symmetrisch,
Fig. 3 beispielhafte Abmessungen für den Lastzähler von Fig. 1,
Fig. 4a bis 4c drei verschiedene Stufen der Schädigung des Lastzählers von Fig. 1.

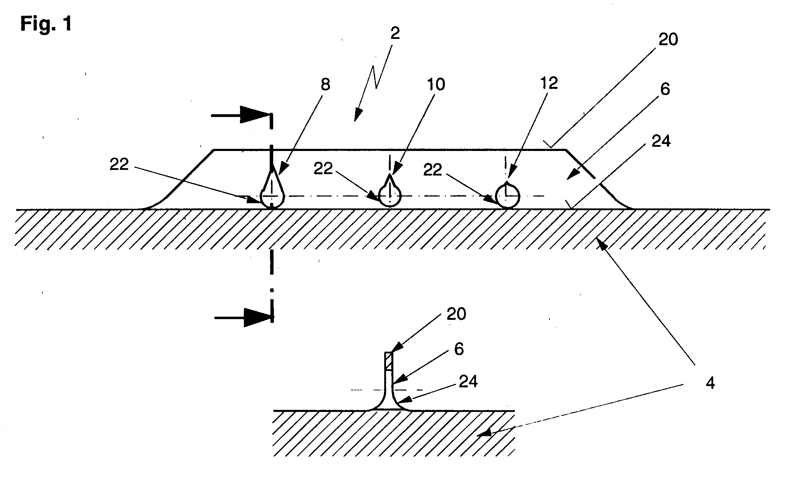

Fig. 1 zeigt einen Lastzähler **2** (auch als Probe bezeichnet), der in eine Struktur **4** integriert ist.

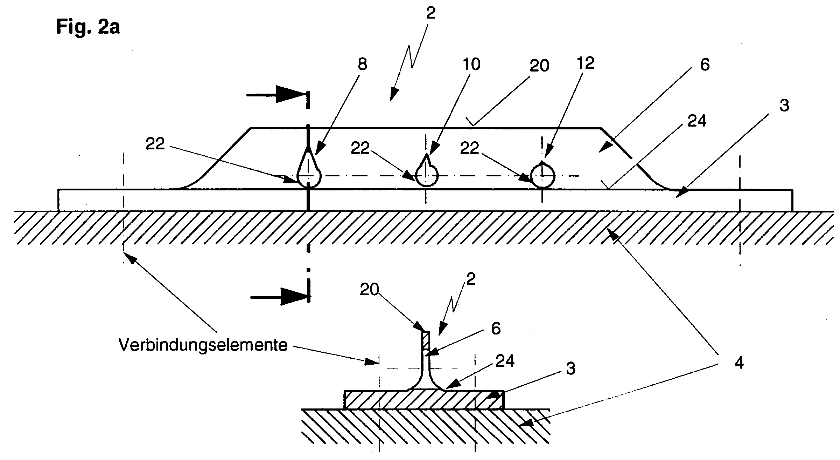

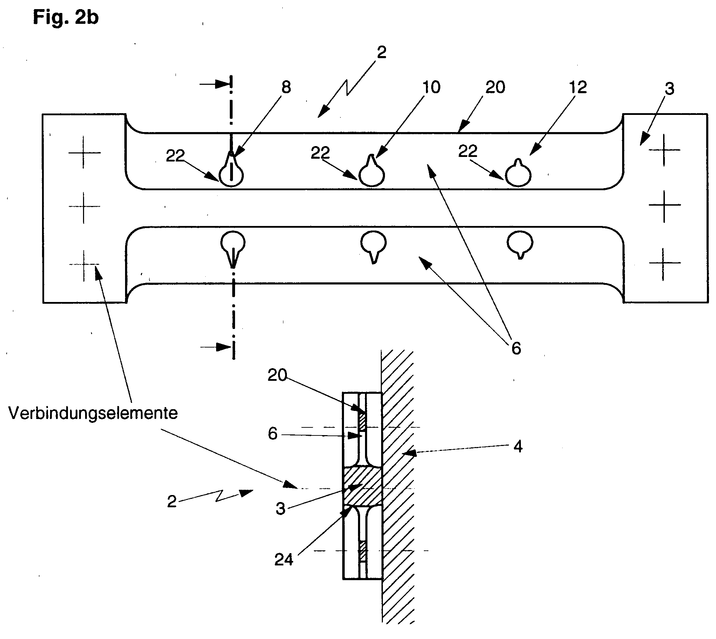

Fig. 2a, b zeigen einen Lastzähler **2**, der in eine Platte **3** integriert ist, die mit der Struktur **4**, z.B. mittels Schrauben, fest verbunden ist.

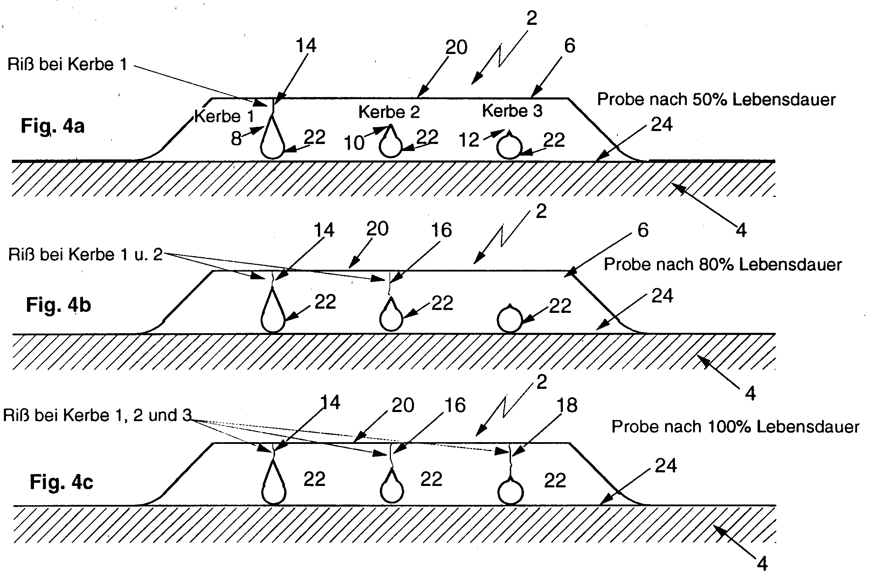

Der Lastzähler besteht in Fig. 1 und 2 aus einer Rippe **6**. In diese Rippe **6** sind nach dem Ergebnis einer bruchmechanischen Auslegung (Größe, Gestalt, Abstand) mehrere Kerben **8, 10, 12** eingearbeitet, die so gestaltet sind, daß nach einer definierten Schädigung der Struktur **4** Risse **14, 16, 18** (Fig. 4a bis 4c) von der Kerbe **8, 10, 12** zur Außenseite **20** der Rippe **6** auftreten. Auf der entgegengesetzten Seite am Fuß der Kerbe ist die Probe **2** so gestaltet, daß während des gesamten Lebens der Struktur **4** keine Anrisse auftreten können. Dies wird vor allem dadurch erreicht, daß
- die Kerbe **8, 10, 12** an ihrem Fuß eine große Rundung **22** aufweist und
- daß der Grund der Kerbe unmittelbar am Fuß **24** der Rippe liegt.

Dadurch wird erreicht, daß der Querschnitt am Kerbgrund stark Zunimmt und somit die Spannungserhöhung durch die Anbindung der Probe klein und unkritisch bleibt. Dies ist besonders dann erforderlich, wenn die Probe **2** bei den stark gekerbten Löchern (Fig. 4b) bereits durchgerissen ist.

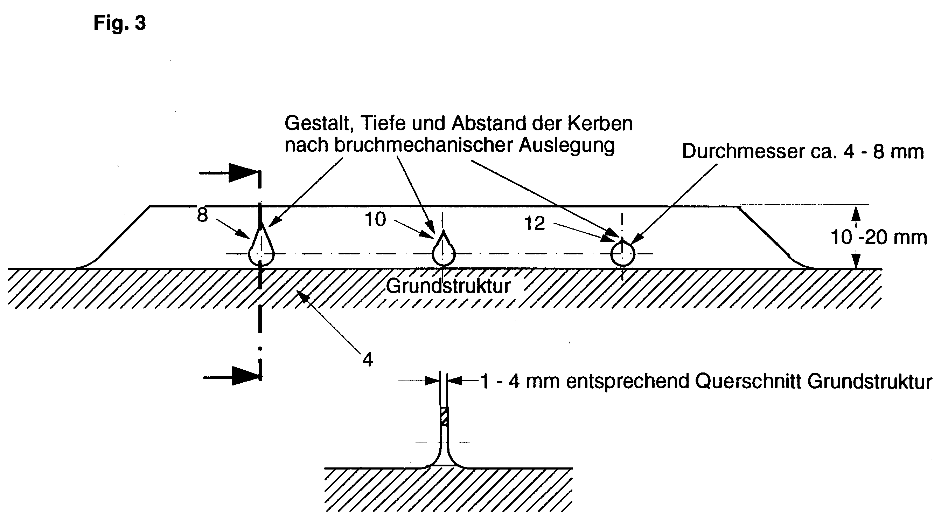

Die in Fig. 3 gezeigten beispielhaften Abmessungen des Lastzählers **2**, sind: Länge der Rippe **6**, ca. 20 mal Höhe der Rippe, Höhe der Rippe 10 bis 20 mm, Wandstärke der Rippe 1 bis 4 mm. Der Durchmesser der ausgerundeten Kerben beträgt beispielsweise 6 bis 8 mm. Die Rippe **6** besteht vorzugsweise aus dem gleichen Material wie die Struktur **4**. Dies kann z.B. eine Aluminiumlegierung oder auch Stahl sein. Grundsätzlich kann der erfindungsgemäße Lastzähler bei allen duktilen, kerbempfindlichen Werkstoffen angewendet werden.

Fig. 4a, 4b und 4c zeigen den Lastzähler **2** nach 50 %, 80 % und 100 % seiner Lebensdauer, wobei die von den Kerben **8, 10, 12** ausgehenden Risse **14, 16, 18** bei einer Sichtkontrolle ohne technische Hilfsmittel zu erkennen sind.

Der erfindungsgemäße Lastzähler kann universell bei allen Arten von Strukturen wie Strassenbrücken, Krane, Flugzeuge, Schiffe, Bahnen, Maschinen eingesetzt werden.
In Versuchen wurde der Lastzähler erfolgreich an modularen Pionierbrücken eingesetzt. Solche Pionierbrücken werden auf Zeitfestigkeit ausgelegt (z.B. 10.000 Überfahrten eines Kampfpanzers). Die Belastung der einzelnen Module ist jedoch im praktischen Einsatz der Brücke recht unterschiedlich.

Die Parameter sind:
- Einbauort in der Brücke
- Spannweite der Brücke
- Gewicht der überfahrenden Fahrzeuge.
Um beurteilen zu können, welche Schädigungen die einzelnen Teile einer Brücke durch ihren Einsatz nach einer gewissen Zeit erfahren haben, bedarf es einer Einrichtung die die Schädigung zuverlässig ermittelt. Dazu dient der erfindungsgemäße Lastzähler **2**.

## Patentansprüche

1. Einrichtung zum Überwachen der Zeitfestigkeit von Strukturen, **dadurch gekennzeichnet**, daß eine integrale oder mit der Struktur (**4**) fest verbundene Rippe (**6**) mehrere Kerben (**8, 10, 12**) aufweist.

2. Lastzähler nach Anspruch 1, **dadurch gekennzeichnet**, daß die Kerben (**8, 10, 12**) unterschiedlich groß gestaltet sind.

3. Lastzähler nach Anspruch 2, **dadurch gekennzeichnet**, daß die Kerben (**8, 10, 12**) zur Außenseite der Rippe (**6**) zeigen.

4. Verwendung der Einrichtung nach Ansprüchen 1 bis 3, als Lastzähler für modulare Pionierbrücken.
